# EUROPEAN PATENT SPECIFICATION

(11) **EP 1 416 561 B1**
(45) Date of publication and mention of the grant of the patent: **21.05.2008**
(21) Application number: 03024540.1
(22) Date of filing: 27.10.2003
(51) Int. Cl.: H01M 8/04

(54) **Method of operation fuel cell system and fuel cell system**
Verfahren zum Betrieb eines Brennstoffzellensystems und Brennstoffzellensystem
Procédé de fonctionnement d'un système de piles à combustible et système de piles à combustible

(30) Priority: 31.10.2002 JP 2002317794
(43) Date of publication of application: 06.05.2004
(73) Proprietor: MATSUSHITA ELECTRIC INDUSTRIAL CO., LTD, Kadoma-shi, Osaka 571-8501 (JP)
(72) Inventor: Takebe, Yasuo, Uji-shi Kyoto 611-0002 (JP); Hatoh, Kazuhito, Osaka-shi Osaka 536-0015 (JP); Kusakabe, Hiroki, Sakai-shi Osaka 590-0113 (JP); Kanbara, Teruhisa, Toyonaka-shi Osaka 560-0056 (JP); Uchida, Makoto, Hirakata-shi Osaka 573-1145 (JP); Kosako, Shinya, Kobe-shi Hyogo 657-0015 (JP); Tsuji, Yoichiro, Katano-shi Osaka 576-0036 (JP); Sugawara, Yasushi, Higashiosaka-shi Osaka 577-0056 (JP); Morita, Junji, Moriguchi-shi Osaka 570-0031 (JP); Arisaka, Shinichi, Neyagawa-shi Osaka 572-0055 (JP); Urata, Takayuki, Kawabe-gun Hyogo 666-0261 (JP); Umeda, Takahiro, Nara-shi Nara 630-8053 (JP); Shibata, Soichi, Hirakata-shi Osaka 573-1149 (JP)
(74) Representative: Leinweber & Zimmermann

(56) References cited:
- EP-A- 1 164 048
- US-A- 4 963 443
- US-A- 6 068 942
- US-A1- 2002 098 393
- PATENT ABSTRACTS OF JAPAN vol. 1995, no. 03, 28 April 1995 (1995-04-28) -& JP 06 333586 A (SANYO ELECTRIC CO LTD), 2 December 1994 (1994-12-02)
- PATENT ABSTRACTS OF JAPAN vol. 2002, no. 11, 6 November 2002 (2002-11-06) -& JP 2002 208421 A (DENSO CORP), 26 July 2002 (2002-07-26)
- PATENT ABSTRACTS OF JAPAN vol. 2002, no. 07, 3 July 2002 (2002-07-03) -& JP 2002 093448 A (OSAKA GAS CO LTD), 29 March 2002 (2002-03-29)

## Description

### BACKGROUND OF THE INVENTION

### 1. Field of the Invention:

The present invention relates to an operation method for stopping a fuel cell system provided with a fuel cell using a polyelectrolyte, according to the preamble of claim 1, and to a fuel cell system for carrying out the method.

### 2. Description of the Related Art:

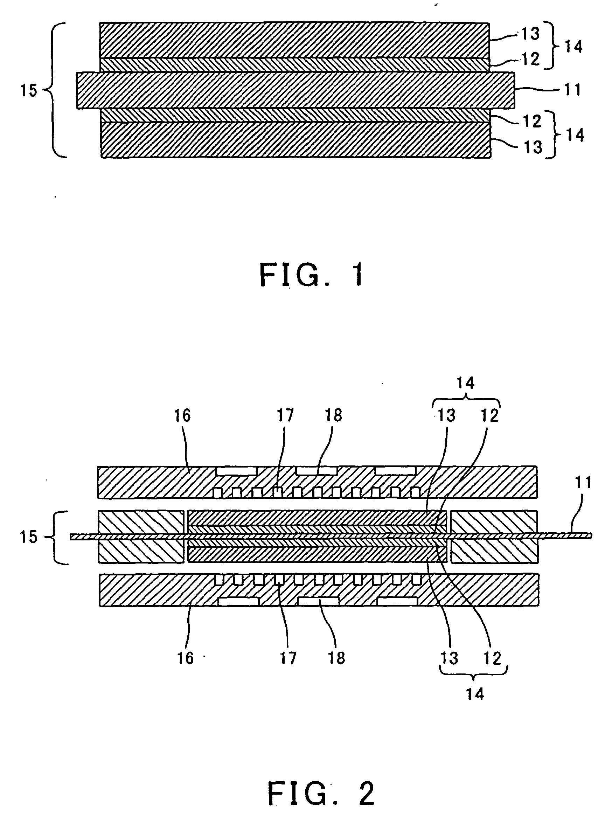

In a fuel cell using a polyelectrolyte, a fuel gas containing hydrogen electrochemically reacts with an oxidizing agent gas such as oxygen-containing air, thereby simultaneously generating an electric power and heat. Fig. 1 is a sectional view to schematically show the construction of MEA (membrane electrode assembly) with which a cell of a solid polyelectrolyte type fuel cell is provided. As shown in Fig. 1, a catalyst layer 12 constituted of a mixture of a catalyst obtained by carrying a platinum (Pt) based metallic catalyst on a carbon powder and a hydrogen ion conductive polyelectrolyte is disposed on the both surfaces of a polyelectrolyte membrane 11 of selectively transporting a hydrogen ion.

As present, as the polyelectrolyte membrane 11, polyelectrolyte membranes made of perfluorocarbon sulfonic acid (such as Nafion membranes manufactured by DuPont de Nemours & Co., U.S.A.) are generally used.

A gas diffusion layer 13 constituted of, for example, a water repellent finished carbon paper and having both air permeability and electronic conductivity is formed on the outer surface of the catalyst layer 12. A combination of the catalyst layer 12 and the gas diffusion layer 13 is called an electrode 14. Incidentally, the electrode 14 into which a fuel gas is fed is hereinafter properly called an anode, whereas the electrode 14 into which an oxidizing agent gas is fed is called a cathode.

For the sake of preventing the fuel gas and the oxidizing agent gas to be fed against the polyelectrolyte membrane 11 from leakage into the outside and preventing the foregoing two kinds of gases from mixing, a gas sealing material and a gasket are disposed around the electrode 14 while putting the polyelectrolyte membrane 11 therebetween. The sealing material and the gasket are integrated with the electrode 14 and the polyelectrolyte membrane 11, and a combination of all of them is called an MEA 15.

Fig. 2 is a sectional view to schematically show the construction of a cell provided with the MEA shown in Fig. 1. As shown in Fig. 2, conductive separator plates 16 for mechanically fixing the MEA 15 are disposed outside the MEA 15. Gas passages 17 for feeding a reactive gas into the electrode 14 and carrying a formed gas and an excessive gas away are formed on the surface in the side where each of these separator plates 16 is into contact with the MEA 15. Incidentally, though the gas passages can be provided individually from the separator plate, a mode in which grooves are provided on the surface of the separator plate to form gas passages is general.

In this way, the MEA 15 is fixed by a pair of the separators 16, the fuel gas is fed into the gas passage 17 of one side, and the oxidizing agent gas is fed into the gas passage 17 of the other side. Thus, it is possible to generate an electromotive force of from about 0.7 to 0.8 V by one cell at the time of applying an electric current with an effective current density of from several tens to several hundreds mA/cm². However, in general, when a fuel cell is used as an electric source, a voltage of from several volts to several hundreds volts is required, and therefore, a necessary number of cells will be actually connected in series.

For the sake of feeding a gas into the gas passage, it is required to branch a piping through which the gas to be fed from the outside passes so as to correspond to the number of the separator plates 16 and provide a jig for piping so as to connect the tip of the branch directly to the groove on the separator plate 16. This jig is called a manifold, and the manifold of the foregoing type of connecting the piping for feeding a gas directly to the groove of the separator 16 is especially called an external manifold. Also, this manifold also includes a form having a simpler structure, which is called an internal manifold. In the internal manifold as referred to herein, a penetrating hole is provided in the separator plate having a gas passage formed therein, and a port of the gas passage is penetrated into this hole, so that a gas is directly fed into the gas passage from this hole.

Next, the functions of the foregoing gas diffusion layer 13 and the catalyst layer 12 will be described. The gas diffusion layer 13 mainly has the following three functions. The first function is to diffuse a reactive gas such as a fuel gas or an oxidizing agent gas for the sake of uniformly feeding the reactive gas into a catalyst in the catalyst layer 12 from the gas passage positioned on the outer surface of the gas diffusion layer 13. The second function is to quickly discharge water formed by the reaction in the catalyst layer 12 into the gas passage formed on the separator plate 16. The third function is to conduct electrons necessary for the reaction or formed electrons. Accordingly, the gas diffusion layer 13 is required to have high reactive gas permeability, water discharge property, and electronic conductivity.

On the other hand, the catalyst layer 12 mainly has the following four functions. The first function is to feed a reactive gas such as a fuel gas or an oxidizing agent gas, which is fed from the gas diffusion layer 13, into the reaction site of the catalyst layer 12. The second function is to conduct a hydrogen ion necessary for the reaction on the catalyst or a formed hydrogen ion. The third function is to conduct electrons necessary for the reaction on the catalyst or formed electrons. The fourth function is to promote electrode reaction because of high catalytic performance. Accordingly, the catalyst layer 12 is required to have high reactive gas permeability, hydrogen ion conductivity, electronic conductivity, and catalytic performance.

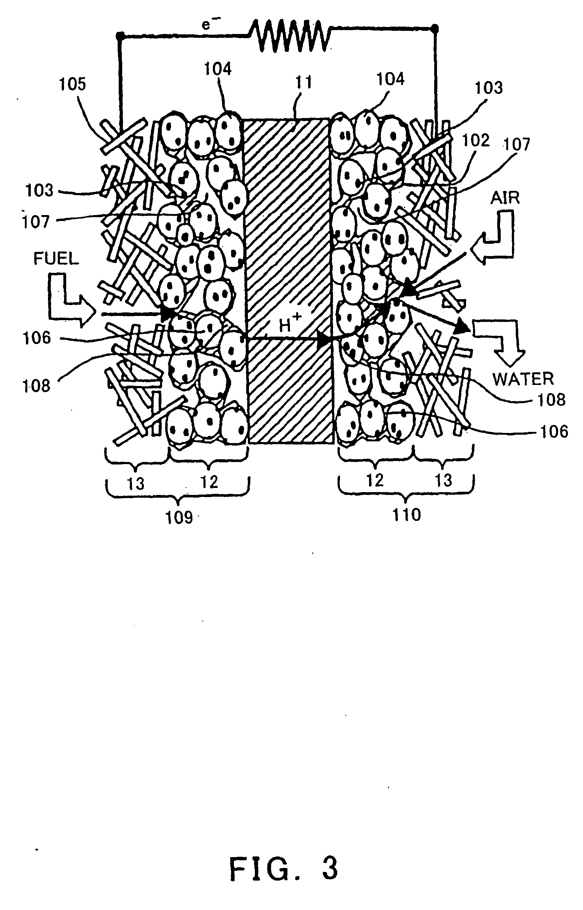

Fig. 3 is a sectional view to schematically show the detailed construction of MEA. The gas diffusion layer 13 is generally constituted using a carbon fine powder having a developed structure, a pore forming material, and a conductive porous substrate such as carbon paper and carbon cloth. Thus, the gas diffusion layer 13 has a porous structure, and as a result, high reactive gas permeability is obtained.

Also, it is generally carried out to disperse a water repellent polymer represented by fluorocarbon resins in the gas diffusion layer 13. As a result, high water discharge property is obtained.

In addition, the gas diffusion layer 13 is generally constituted by carbon fibers 105, metallic fibers, and an electronically conductive material such as a carbon fine powder. In this way, high electronic conductivity is obtained.

On the other hand, a carbon fine powder having a developed structure and a pore forming material are generally used for a catalyst carrier 104 in the catalyst layer 12. Thus, the catalyst layer 12 has a porous structure, and a gas channel 107 is formed. Thus, high reactive gas permeability is obtained.

Also, it is generally carried out to form a hydrogen ion network 108 by dispersing a polyelectrolyte 102 in the vicinity of a catalyst 103 in the catalyst layer 12. In this way, high hydrogen ion conductivity is obtained.

Also, it is general to use an electronically conductive material such as a carbon fine powder or carbon fibers for the catalyst carrier 104 in the catalyst layer 12. In this way, an electron channel 106 is formed, and therefore, high electronic conductivity is obtained. -

In addition, it is carried out to use a metallic catalyst having high reaction activity represented by Pt as the catalyst 103, carry this metallic catalyst as very fine particles having a particle size of several nm on a carbon fine powder and then highly disperse the resulting catalyst substance in the catalyst layer 12. In this way, it becomes possible to improve the catalytic performance of the catalyst layer 12.

In the fuel cell thus constituted, for the sake of stably carrying out power generation reaction over a long period of time, it is necessary to stably hold the interface between the polyelectrolyte membrane 11 and the electrode 14 over a long period of time. Also, since the polyelectrolyte membrane 11 generates hydrogen ion conductivity in the hydrous state, it is required that the polyelectrolyte membrane 11 holds the hydrous state over a long period of time. Incidentally, in recent years, in fuel cells, in the case where the reactive gas is utilized in the relatively low moistened state, a phenomenon in which the polyelectrolyte membrane is decomposed becomes problematic. For this reason, for the sake of suppressing such decomposition of the polyelectrolyte membrane, it is already understood that the polyelectrolyte membrane is required to hold the water retention state.

In order to solve such problems, for example, there is proposed an operation method of a fuel cell system in which the fuel gas and the oxidizing agent gas remaining within the fuel cell are replaced by water or a moistened inert gas, and the system is stopped in the sealed state (for example, see JP-A-6-251788). By carrying out the operation of the fuel cell system in such a way, since the water retention state of the polyelectrolyte membrane is held, the power generation can be rapidly started at the time of restarting, so that it is possible to stably carry out the power generation reaction in the fuel cell.

Also, there is proposed an operation method of a fuel cell system in which the cell is subjected to power generation in the state of stopping the feed of the oxidizing agent gas to consume oxygen of a cathode, and the fuel gas remaining in an anode is then replaced by an inert gas such as nitrogen to stop the power generation of the fuel cell (for example, see JP-2002-93448). In this way, not only oxidation of the cathode can be suppressed, but also hydrogen diffused from the anode via a polyelectrolyte can reduce impurities adhered to the cathode and remove them.

Now, in the case where the cathode is at a high potential, due to the event that the fuel cell holds a very high voltage exceeding 0.9 V, which is close to the open circuit state, it is already understood that problems such as elution of the Pt catalyst of the cathode and reduction in reaction area of the Pt catalyst due to sintering (enlargement of Pt particles) occur.

Similarly, in the case where the fuel cell holds a very high voltage, which is close to the open circuit state, there occurs a problem that the polyelectrolyte decomposes. It is considered that such problem is caused by the following reasons.

An open circuit voltage of the fuel cell utilizing hydrogen and oxygen as reaction seeds is theoretically considered to be 1.23 V. However, the actual open circuit voltage is a mixed potential of impurities in the respective electrodes, i.e., an anode and a cathode, and adsorption seeds and is from about 0.93 V to 1.1 V. Also, the open circuit voltage is lowered from the theoretical value due to the event that hydrogen and oxygen are slightly diffused in the polyelectrolyte membrane. Assuming that no dissolution of impurities such as radical metal seeds occurs, the potential of the anode is greatly influenced by the adsorption seeds of the cathode and is considered to become a mixed potential of chemical reactions expressed by the following reaction equations 1 to 5 as described in H. Wroblowa, et al., J. Electroanal. Chem., 15, pp.139-150 (1967), "Adsorption and Kinetics at Platinum Electrodes in the Presence of Oxygen at Zero Net Current". Incidentally, the voltage expressed as corresponding to each of the reaction equations shows the standard electrode potential against a standard hydrogen electrode when the reaction expressed by the subject reaction equation occurs. In the case where the potential of the anode is high in this way, it is considered that hydroxide radical OH·), super oxide (O₂⁻.), and hydrogen radical (H·) are generated in high concentrations, whereby these radicals attack a part having high reactivity in the polyelectrolyte to decompose the polyelectrolyte.

(Reaction equation 1 O₂ + 4H⁺ + 4e⁻ = 2H₂O 1.23 V

Reaction equation 2 PtO₂ + 2H⁺ + 2e⁻ = Pt (OH)₂ 1.11 V

Reaction equation 3 Pt (OH) 2 + 2H⁺ + 2e⁻ = Pt + 2H₂O 0.98 V

Reaction equation 4 PtO + 2H⁺ + 2e⁻ = Pt + H₂O 0.88 V

Reaction equation 5 O₂ + 2H⁺ + 2e⁻ = H₂O₂ 0.68 V

In order to avoid the foregoing problems caused by the event that the fuel cell becomes in the state of open circuit voltage, there have hitherto been proposed some operation methods of fuel cell system.

For example, there is proposed an operation method of a fuel cell system in which an electric power consumption measure for consuming an electric power is provided within the fuel cell system independently from an external load, and the fuel cell and the electric power consumption measure are connected during a period of time until the fuel cell and the. external load are connected after the fuel cell starts power generation, whereby the electric power formed in the fuel cell is consumed by the electric power consumption measure, thereby resulting in enabling to avoid the matter that the fuel cell becomes in the state of open circuit voltage (for example, see JP-A-5-251101).

Also, there is proposed an operation method of a fuel cell system in which a discharge measure for suppressing an open circuit voltage is provided within the fuel cell system, thereby avoiding the event that the fuel cell becomes in the state of open circuit voltage (for example, see JP-A-8-222258).

According to these operation methods of fuel cell systems, it is possible to avoid the foregoing elution of the Pt catalyst of the cathode and reduction in reaction area of the catalyst due to sintering. Also, it is possible to avoid the event that the polyelectrolyte is decomposed due to the formation of radicals.

However, in the case of the foregoing operation method of a fuel cell system by purging with an inert gas such as nitrogen, there arises a problem that not only a gas cylinder of the inert gas is necessary, leading to enlargement in size of the fuel cell system, but also the maintenance such as exchange of the gas cylinder is expensive, leading to an increase in costs.

Also, in the foregoing operation method of a fuel cell system by purging with water or a moistened inert gas, since the temperature of the fuel cell is lowered at the time of stopping the power generation of the fuel cell, dew condensation occurs inside the fuel cell, and the volume is reduced. Accordingly, since the inside of the fuel cell becomes in the state of a negative pressure, there arises problems that oxygen enters from the outside and that the polyelectrolyte membrane breaks, leading to potential occurrence of a short circuit of the electrodes.

Also, in the case where the cell is subjected to power generation in the state of stopping feeding of the oxidizing agent gas to consume oxygen of the cathode, and the anode is then purged with an inert gas, there was involved a problem such that since the Pt catalyst of the cathode is oxidized with oxygen remaining without being consumed and air incorporated due to diffusion and leakage, the cathode is degraded. Moreover, there arises a problem that since oxygen is forcedly consumed by power generation, the potential of the cathode is not uniform, and the activation state of the cathode varies every time when the power generation of the fuel cell is stopped, leading to scattering of the cell voltage at the time of start.

In addition, in the case of the foregoing operation method of a fuel cell system by avoiding the matter that the fuel cell becomes in the state of open circuit voltage, the fuel cell is always in the state of power generation. However, in the case of a fuel cell system for household use using a raw material gas such as town gas containing methane as the major component, in order to suppress the heating and lighting expenses, it is desired to control the motions of the fuel cell so as to stop the power generation in a time zone where the electric consumption is small and carry out the power generation in a time zone where the electric consumption is large. For example, according to the DSS (Daily Start-up & Shut-down) wherein the power generation is carried out in the daytime and is stopped in the middle of the night, it is possible to avoid an increase the heating and lighting expenses. Therefore, it is desired to control the motions of the fuel cell so as to repeat the power generation state and the non-power generation state, and an operation method of a fuel cell system capable of avoiding the matter that the fuel cell becomes in the open circuit voltage even in such motion pattern is desirable.

Japanese Laid-Open Patent Application Publication No. Hei. 6-333586 discloses a method for operating (stopping) a fuel cell, where an external load is disconnected, feeding of air to cathode which is not closed is stopped while feeding fuel gas (hydrogen) to anode, and an internal load is switched on, and when a cell voltage is lowered to a predetermined voltage, the feeding of the fuel gas is stopped, the internal load is disconnected, and the cathode is closed.

US2002/098393 discloses a method for operating (stopping) a fuel cell, where when an external load is disconnected, feeding of oxidizing gas to cathode is stopped, and an auxiliary resistive load is switched on to reduce cell voltage to 0.2 V or less and cathode potential while fuel gas is still fed, and then the feeding of fuel gas is stopped.

### SUMMARY OF THE INVENTION

Under such circumstances, the invention has been made. An object of the invention is to provide an operation method of a fuel cell in which when a fuel cell stops power generation, by controlling the voltage of the cell, it is possible to improve durability of the fuel cell and a power generation system of a fuel cell for carrying out the method.

According to the invention, the above object is achieved by a method of stopping a fuel cell according to claim 1.

Preferably said catalyst comprises Pt.

The invention also covers a fuel cell comprising control means for performing the method according to any preceding claim.

Preferably, the fuel cell according to the invention comprises a fuel gas feed control means,an oxidizing agent feed control means and/or a cell voltage detection means.

Finally, the invention covers a system of two or more fuel cells as detailed above.

In other words, the method of operating the fuel cell system of the invention is characterized by a method of operating a fuel cell system which is provided with a fuel cell having at least one cell provided with an electrolyte, an anode and a cathode each having a platinum based metallic catalyst, the electrolyte being put between the anode and the cathode, and a pair of separator plates having gas passages for feeding a fuel gas into the anode and feeding an oxidizing agent gas into the cathode, respectively and which switches connection and disconnection between the fuel cell and a load, wherein feeding of the oxidizing agent gas into the cathode and feeding of the fuel gas into the anode are continued until a prescribed period of time elapses after disconnection between the fuel cell and the load, and thereafter, feeding of each of the oxidizing agent gas and the fuel gas is stopped, thereby controlling the operation such that the time when the cell of the fuel cell has a voltage of 0.9 v or more falls within 10 minutes, and after feeding of the oxidizing agent gas into the cathode and feeding of the fuel gas into the anode are continued until a prescribed period of time elapses after disconnection between the fuel cell and the load, feeding of the fuel gas is then stopped, and thereafter, feeding of the oxidizing agent gas is stopped.

Also, the fuel cell system of the invention is characterized by a fuel cell system which is provided with a fuel cell having at least one cell provided with an electrolyte, an anode and a cathode each having a platinum based metallic catalyst, the electrolyte being put between the anode and the cathode, and a pair of separator plates having gas passages for feeding a fuel gas into the anode and feeding an oxidizing agent gas into the cathode, respectively and a control unit of controlling switch of connection and disconnection between the fuel cell and a load, wherein the control unit is constructed such that feeding of the oxidizing agent gas into the cathode and feeding of the fuel gas into the anode are continued until a prescribed period of time elapses after disconnection between the fuel cell and the load, and thereafter, feeding of each of the oxidizing agent gas and the fuel gas is stopped, thereby controlling the time when the cell of the fuel cell has a voltage of 0.9 V or more to fall within 10 minutes, and after feeding of the oxidizing agent gas into the cathode and feeding of the fuel gas into the anode are continued until a prescribed period of time elapses after disconnection between the fuel cell and the load, feeding of the fuel gas is then stopped, and thereafter, feeding of the oxidizing agent gas is stopped.

### BRIEF DESCRIPTION OF THE DRAWINGS

Fig. 1 is a sectional view to schematically show the construction of MEA (membrane electrode assembly) with which a cell of a solid polyelectrolyte type fuel cell is provided.
Fig. 2 is a sectional view to schematically show the construction of a cell provided with the MEA shown in Fig. 1.
Fig. 3 is a sectional view to schematically show the detailed construction of MEA.
Fig. 4 is a block diagram to show one example of the construction of a fuel cell system according to Embodiment 1 of the invention.
Fig. 5 is a timing chart to show the operations of a fuel cell system according to Embodiment 1 of the invention in the case where a fuel cell stack stops power generation.
Fig. 6 is a graph to show the changes in voltage of a cell in the evaluation test.

### DESCRIPTION OF THE PREFERRED EMBODIMENTS

The mode for carrying out the invention will be described below in detail with reference to the drawings.

### (Embodiment 1)

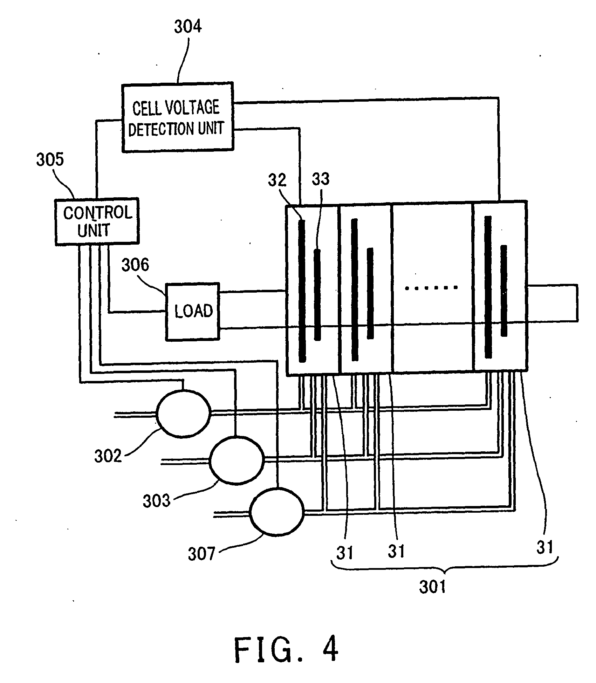

Fig. 4 is a block diagram to show one example of the construction of a fuel cell system according to Embodiment 1 of the invention. In Fig. 4, 301 stands for a fuel cell stack. This fuel cell stack 301 is constituted of stacked plural cells 31, 31 ··· . The respective cells 31 are provided with a pair of electrodes, i.e., an anode 32 and a cathode 33, and are connected in series.

Incidentally, the construction of the fuel cell stack 301 is the same as a usual polyelectrolyte type fuel cell stack. Accordingly, a polyelectrolyte membrane is disposed between the anode 32 and the cathode 33 of each cell 31. Also, the anode 32 and the cathode 33 are each comprised of a gas diffusion layer and a catalyst layer, and the catalyst layer has a Pt catalyst.

The fuel cell stack 301 is connected to a load 306 and a cell voltage detection unit 304 for detecting the voltage of each cell 31.

Also, the anode 32 of each cell 31 is connected to a fuel gas control unit 302 for controlling feeding of a fuel gas. On the other hand, the cathode 33 of each cell 31 is connected to an oxidizing agent gas control unit 303 for controlling feeding of an oxidizing agent gas.

In addition, the anode 32 of each cell 31 is connected to an inert gas control unit 307 for controlling feeding of an inert gas such as nitrogen. In the fuel cell system of this embodiment, after stop of the load 306, the anode 32 is purged with an inert gas as described later.

The fuel gas control unit 302, the oxidizing agent gas control unit 303, the cell voltage detection unit 304, the load 306, and the inert gas control unit 307 are connected to a control unit 305.

For the sake of (starting and) stopping feeding of a fuel gas at a proper timing, the control unit 305 controls the operations of the fuel gas control unit 302. Similarly, for the sake of (starting and) stopping feeding of an oxidizing agent gas at a proper timing, the control unit 305 controls the operations of the oxidizing agent gas control unit 303.

Also, the control unit 305 switches connection and disconnection between the fuel cell stack 301 and the load 306.

Next, when the fuel cell stack 301 of the fuel cell system of this embodiment as thus constructed, the timing of stopping feeding of the oxidizing agent gas and the fuel gas will be described.

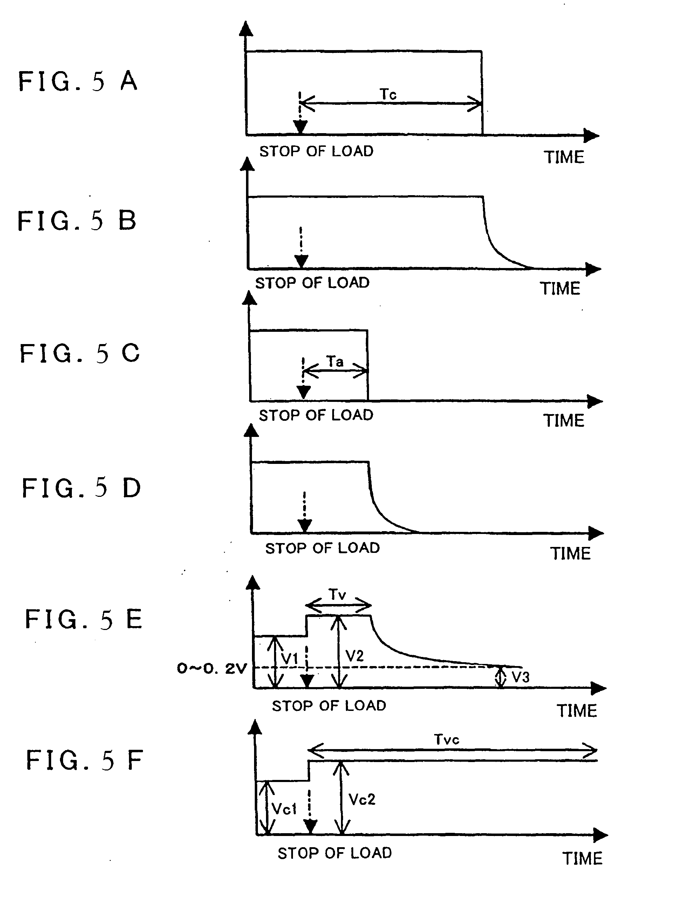

Fig. 5 is a timing chart to show the operations of the fuel cell system according to Embodiment 1 of the invention in the case where the fuel cell stack 301 stops power generation. In Fig. 5, Fig. 5A shows the timing that the oxidizing agent gas control unit 303 stops feeding the oxidizing agent gas into the cathode 33; and Fig. 5B shows the changes in amount of the oxidizing agent gas to be fed into the cathode 33, respectively. On the other hand, in Fig. 5, Fig. 5C shows the timing that the fuel gas control unit 302 stops feeding the fuel gas into the anode 32; and Fig. 5D shows the changes in amount of the fuel gas to be fed into the anode 32, respectively. Also, in Fig. 5, Fig. 5E shows the changes in voltage of the cell 31; and Fig. 5F shows the changes in potential of the cathode 33, respectively. Incidentally, a value against a reversible hydrogen electrode (RHE) is employed as the potential of the cathode 33 as referred to herein.

In the fuel cell system according to this Embodiment of the invention, after stop of the load, feeding of the oxidizing agent gas is carried out for a longer period of time as compared with feeding of the fuel gas, thereby avoiding degradation of the fuel cell.

As shown in Fig. 5A, in this embodiment, the control unit 305 controls the operations of the oxidizing agent gas control unit 303 such that during a period of from disconnection between the fuel cell stack 301 and the load 306, i.e., stop of the load 306, until a lapse of a prescribed period of time Tc, the oxidizing agent gas is fed into the cathode 33. In this case, as shown in Fig. 5B, the amount of the oxidizing agent gas to be fed into the cathode 33 gradually decreases after stopping feeding of the oxidizing agent gas.

On the other hand, as shown in Fig. 5C, the control unit 305 controls the operations of the fuel gas control unit 302 such that during a period of from stop of the load 306 until a lapse of a prescribed period of time Ta, the fuel gas is fed into the anode 32. In this case, as shown in Fig. 5D, the amount of the fuel gas to be fed into the anode 32 gradually decreases after stopping feeding of the fuel gas.

The time Tc is longer than the time Ta. That is, after stop of the load 306, feeding of the fuel gas into the anode 32 is stopped when the time Ta elapses, and feeing of the oxidizing agent gas into the cathode 33 is then stopped when the time Tc elapses. For this reason, the gas is fed into only the cathode 33 during a period of time of (Tc - Ta) which is a value obtained by subtracting the time Ta from the time Tc.

When feeding of the oxidizing agent gas and the fuel gas is carried out in the way described previously, as shown in Fig. 5E, the voltage of the cell 31 instantaneously rises from a voltage V1 (from about 0.7 to 0.75 V) when the load 306 starts to an open circuit voltage V2 (a value exceeding 0.9 V) when the load 306 stops. Thereafter, the voltage of the cell 31 keeps a value of the open circuit voltage V2 for a period of time Tv. And, after stopping feeding of the fuel gas, the voltage of the cell 31 gradually decreases and finally reaches a voltage V3 of from about 0 to 0.2 V.

At this time, as shown in Fig. 5F, the potential of the cathode 33 instantaneously rises from a potential Vc1 (from about 0.7 to 0.75 V) when the load 306 starts to an open circuit potential Vc2 (a value exceeding 0.9 V) when the load 306 stops. Thereafter, since feeding of the oxidizing agent gas into the cathode 33 is still continued, the potential of the cathode 33 keeps a value of the open circuit potential Vc2.

Incidentally, as shown in Fig. 5E, the reason why after a lapse of the time Tv, the voltage of the cell 31 decreases resides in the event that the potential of the anode 32 increases with a decrease in hydrogen concentration of the fuel gas.

In this embodiment, by defining the foregoing times Tc and Ta such that the time Tv is shortened as quickly as possible, specifically falls within one minute, it is possible to suppress degradation of the Pt catalyst and decomposition of the polyelectrolyte.

In the case of this embodiment, after a lapse of the time Tv, the control unit 305 controls the operations of the inert gas control unit 307 such that the anode 32 of each cell 31 is purged with an inert gas. By this purge, it is possible to prevent oxidation of Pt and to safely stop the fuel cell stack 301.

Incidentally, in this embodiment, the purge of the anode 32 is carried out using an inert gas such as nitrogen, but it should not be construed that the invention is limited thereto. For example, the purge may be carried out using, for example, a hydrocarbon gas or a reducing agent.

### [Evaluation test]

In order to evaluate the operation method of the fuel cell system of each of the foregoing embodiments, a fuel cell stack was prepared in the following manner. Then, the test was carried out using thus prepared fuel cell stack. The evaluation test will be described below by referring to Fig. 5.

First of all, acetylene black (Denka Black manufactured by Denki Kagaku Kogyo Kabushiki Kaisha, particle size: 35 nm) as a carbon powder was mixed with an aqueous dispersion of polytetrafluoroethylene (PTFE) (D1 manufactured by Daikin Industries, Ltd.), to prepare a water repellent ink containing 20 % by weight of PTFE in terms of dry weight. This ink is coated on carbon paper (TGPH060H manufactured by Toray Industries, Inc.) as a substrate of a gas diffusion layer, dipped and then heat treated at 300 °C using a hot-air dryer, to form a gas diffusion layer having a thickness of about 200 µm.

On the other hand, 66 parts by weight of a catalyst substance (containing 50 % by weight of Pt) obtained by carrying a Pt catalyst on Ketjenblack (Ketjecnblack EC manufactured by Ketjen Black International Company, particle size: 30 nm) as a carbon powder was mixed with 33 parts by weight of a perfluorocarbon sulfonic acid ionomer (a 5 % by weight dispersion of Nafion manufactured by Aldrich Chemical Corporation, U.S.A.) (in terms of polymer dry weight) as a hydrogen ion conducting material and a binder, and the resulting mixture was molded to form a catalyst layer having a thickness of from 10 to 20 µm.

The gas diffusion layer and catalyst layer thus obtained were welded on the both surfaces of a polyelectrolyte membrane (a Nafion 112 membrane manufactured by DuPont de Nemours & Co., U.S.A.), to prepare MEA having the same construction as in that shown in Fig. 1. Here, an electrode comprising the gas diffusion layer and the catalyst layer disposed on one side of the polyelectrolyte membrane is the anode 32, whereas an electrode comprising the gas diffusion layer and the catalyst layer disposed on the other side of the polyelectrolyte membrane is the cathode 33.

Next, a rubber-made gasket plate was welded to a peripheral portion of the polyelectrolyte of the thus prepared MEA, to form a manifold hole through which cooling water, a fuel gas, and an oxidizing agent gas pass.

Also, a conductive separator plate made of graphite, having an outer size of 20 cm x 32 cm x 1.3 mm and having formed thereon a gas passage and a cooling water passage each having a depth of 0.5 mm, as obtained by impregnating with a phenol resin, was prepared. Using two separator plates, the separator plate having an oxidizing agent gas passage formed thereon was superimposed on one side of MEA, whereas the separator plate having a fuel gas passage formed thereon was superimposed on the other side of MEA, to obtain a cell.

On the surface opposite to the MEA side of the separator plate, a groove for a passage of cooling water was formed. By stacking two cells, a two cell-layered cell having a structure in which cooling water passes between the MEAs was obtained. By repeating this pattern, the fuel cell stack 301 comprising stakked 50 cells was prepared. Incidentally, at this time, a stainless steel-made collecting plate, an insulating plate of an electric insulating material, and an end plate were disposed in the both ends of the fuel cell stack 301, and the whole was fixed by a fastening rod. At this time, the fastening pressure was 15 kgf/cm² per area of the separator plate.

Using the thus prepared fuel cell stack 301, the following evaluation test was carried out.

First of all, the fuel gas control unit 302 fed a fuel gas obtained by modifying a 13A gas as a raw material gas by a modifier into the anode 32, and the oxidizing agent gas control unit 303 fed air as an oxidizing agent gas into the cathode 33. And a discharge test was carried out under the condition that the cell temperature of the fuel cell stack 301 was 70 °C, the fuel gas utilization factor (Uf) was 70 %, and the air utilization factor (Uo) was 40 %. Incidentally, the fuel gas and air were moistened so as to have a dew point of 65 °C and 70 °C, respectively.

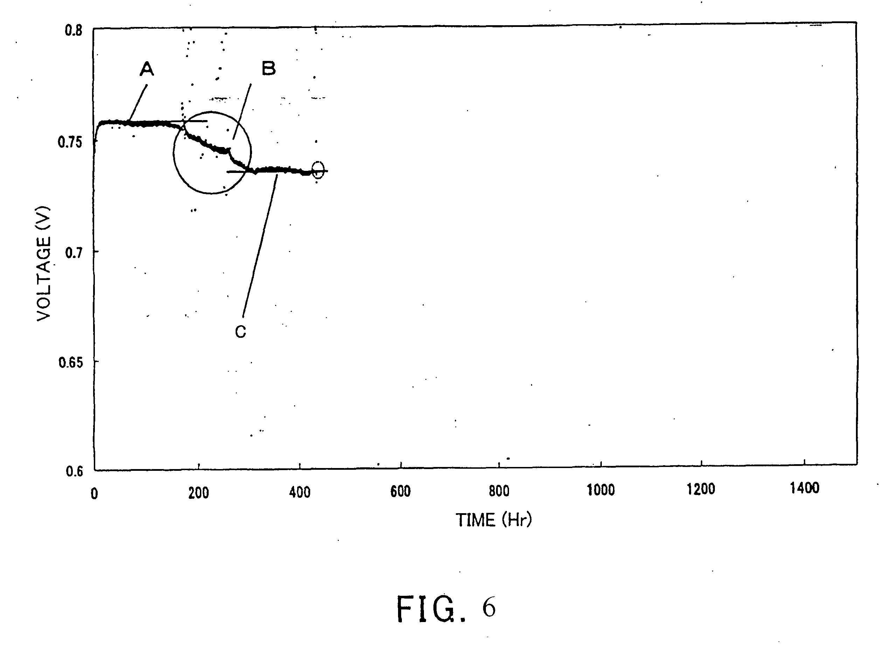

Fig. 6 is a graph to show the changes in voltage of the cell 31 in the evaluation test. In a term A in Fig. 11, the fuel cell stack 301 was subjected to power generation under a continuous load with a current density of 200 mA/cm² in the state of continuously feeding a fuel gas and air into the anode 32 and the cathode 33, respectively. The cell 31 had a voltage of about 0.76 V in the state of connection between the load 306 and the fuel cell stack 301. In this term A, formed water and discharged water in the fuel cell stack 301 were subjected to ion analysis. As a result, the fluorine ion was not more than 0.2 µg/cm² per day. Thus, it was noted that no decomposition of the polyelectrolyte occurred.

In a term B in Fig. 6, the operation method of the Embodiment 1 of the invention was carried out. The current-carrying time was 30 minutes; the time Tv when the voltage of the cell 31 became the open circuit voltage was 2 minutes; after a lapse of the time Tv, purge with moistened nitrogen was carried out for about 10 minutes likewise the fuel gas; and thereafter, the current carrying was restarted. Meanwhile, air was continuously fed into the cathode 33. Such a series of operations was repeatedly carried out. As a result, the voltage of the cell 31 gradually decreases. At the time of completion of the term B about 120 hours after start of the term B, the voltage of the cell 31 decreased to 0.735 V. A degree of decrease in voltage of the cell 31 per one time of a series of operations was from 50 to 100 µV/time.

It is considered that the reason why the voltage of the cell 31 decreased in the term B resides in the event that the performance of the fuel cell stack 301 was deteriorated due to a decrease in reaction area by oxidation of Pt and accumulation of oxidation adsorption seeds in the cathode 33 and the like.

Also, in the term B, formed water and discharged water in the fuel cell stack 301 were subjected to ion analysis. As a result, the fluorine ion was about 1 µg/cm² per day. Thus, it was noted that decomposition of the polyelectrolyte occurred.

However, another test was carried out while setting the time Tv at 0.5 minutes in a series of operations as described previously. As a result, the degree of decrease in voltage of the cell 31 per one time of a series of operations was from 15 µV/time, and the amount of fluorine ion to be detected was not more than 0.5 µg/cm² per day. By shortening the time Tv to not more than one minute in this way, it was noted that there were brought effects of suppressing oxidation of Pt, adsorption of the oxidation seeds, and decomposition of the polyelectrolyte.

In a term C in Fig. 6, the operation method was carried out in the same manner as in the term A. As a result, the voltage of the cell 31 at the time of completion of the term B was kept.

In the method of operating a fuel cell system and the fuel cell system according to the invention, even in the case where the fuel cell repeats the power generation state and the non-power generation state, it is possible to avoid degradation of the fuel cell. Accordingly, the invention is especially useful for automobile fuel cell systems in which start and stop is frequently carried out and fuel cell systems in which start and stop is carried out every day.

## Claims

1. A method for stopping a fuel cell (301), at least one electrode (32, 33) thereof comprising a catalyst,
**characterized by** the following steps:
a) feeding of a fuel gas into the anode of the fuel cell is continued for a first time period (Ta) after disconnection between the fuel cell and the load, and then stopped,
b) feeding of an oxidizing agent into a cathode (33) of the fuel cell is continued for a second time period (Tc) after said disconnection, said second time period being longer than said first time period, and then stopped,
wherein the first and second time periods are controlled so that a cell voltage exceeds a threshold voltage of 0.9 V for 10 minutes or less, preferably for 1 minutes or less.

2. The method according to claim 1, **characterized in that** said catalyst comprises Pt.

3. A fuel cell comprising control means (305 to 307) for performing the method according to claim 1 or 2.

4. The fuel cell according to claim 3, **characterized by**
a fuel gas feed control means (302),
an oxidizing agent feed control means (303) and/or
a cell voltage detection means (304).

5. A system of two or more fuel cells according to claim 3 or 4.

## Patentansprüche

1. Verfahren zum Anhalten einer Brennstoffzelle (301), wobei zumindest eine Elektrode (32, 33) derselben einen Katalysator umfasst,
**gekennzeichnet durch** die folgenden Schritte:
a) das Einspeisen eines Brenngases in die Anode der Brennstoffzelle wird während eines ersten Zeitraums (Ta) nach Unterbrechung zwischen der Brennstoffzelle und der Last fortgesetzt, und dann angehalten,
b) das Einspeisen eines Oxidationsmittels in eine Kathode (33) der Brennstoffzelle wird während eines zweiten Zeitraums (Tc) nach der Unterbrechung fortgesetzt, wobei der zweite Zeitraum länger ist als der erste Zeitraum, und dann angehalten,
wobei der erste und der zweite Zeitraum so gesteuert werden, dass eine Zellspannung eine Schwellenspannung von 0,9 V zehn Minuten lang oder kürzer, bevorzugt eine Minute lang oder kürzer, überschreitet.

2. Verfahren nach Anspruch 1, **dadurch gekennzeichnet, dass** der Katalysator Pt umfasst.

3. Brennstoffzelle, umfassend Steuerungsmittel (305 bis 307) zur Durchführung des Verfahrens nach Anspruch 1 oder 2.

4. Brennstoffzelle nach Anspruch 3, **gekennzeichnet durch**
ein Brenngaseinspeisungs-Steuerungsmittel (302),
ein Oxidationsmitteleinspeisungs-Steuerungsmittel (303) und / oder
ein Zellspannungsdetektionsmittel (304).

5. System aus zwei oder mehr Brennstoffzellen nach Anspruch 3 oder 4.

## Revendications

1. Procédé pour arrêter une pile à combustible (301), dont au moins une électrode (32, 33) comprend un catalyseur,
**caractérisé par** les étapes suivantes :
a) l'introduction d'un combustible gazeux dans l'anode de la pile à combustible continue pendant un premier intervalle de temps (Ta) après la déconnexion entre la pile à combustible et la charge, puis elle est arrêtée,
b) l'introduction d'un agent oxydant dans une cathode (33) de la pile à combustible continue pendant un deuxième intervalle de temps (Tc) après ladite déconnexion, ledit deuxième intervalle de temps étant plus long que ledit premier intervalle de temps, puis elle est arrêtée,
dans lequel les premier et deuxième intervalles de temps sont commandés de telle manière qu'une tension d'élément dépasse une tension de seuil de 0,9 V pendant une durée inférieure ou égale à 10 minutes, de préférence pendant une durée inférieure ou égale à 1 minute.

2. Procédé selon la revendication 1, **caractérisé en ce que** ledit catalyseur comprend du Pt.

3. Pile à combustible comprenant un moyen de commande (305 à 307) pour mettre en oeuvre le procédé selon la revendication 1 ou 2.

4. Pile à combustible selon la revendication 3, **caractérisée par** :
un moyen de commande d'alimentation en combustible gazeux (302),
un moyen de commande d'alimentation en agent oxydant (303) et/ou
un moyen de détection de tension d'élément (304).

5. Système composé de plusieurs piles à combustible selon la revendication 3 ou 4.
